# EUROPÄISCHE PATENTANMELDUNG

(11) **EP 4 442 562 A1**
(43) Veröffentlichungstag der Anmeldung: **09.10.2024**
(21) Anmeldenummer: 24162964.1
(22) Anmeldetag: 12.03.2024
(51) Int. Cl.: B64C 1/14

(54) **INTEGRALE TÜRRAHMENEINHEIT**

(30) Priorität: 14.03.2023 DE 102023106389
(71) Anmelder: Premium AEROTEC GmbH, 86179 Augsburg (DE)
(72) Erfinder: Haack, Cord, 21643 Beckdorf (DE); Paul, Carsten, 21441 Garstedt (DE); Hörger, Bernhard, 86179 Augsburg (DE)
(74) Vertreter: LKGLOBAL Lorenz & Kopf Patentanwalt Attorney at Law PartG mbB

(57) **Zusammenfassung**

Es wird eine Türrahmeneinheit (48) zur Integration in einen Rumpf (4) eines Luftfahrzeugs (2) vorgeschlagen, aufweisend mindestens eine Türrahmenkomponente (50), wobei die Türrahmeneinheit (48) einen inneren Rahmen (28) und einen den inneren Rahmen (28) umgebenden äußeren Rahmen (30) aufweist, wobei der innere Rahmen (28) eine Türrahmenöffnung (32) mit horizontalen Kanten (34) und vertikalen Kanten (36) definiert, in der eine Tür (62) anbringbar ist, wobei eine Vielzahl von Querstreben (38, 40, 42, 44) zwischen dem inneren Rahmen (28) und dem äußeren Rahmen (30) verlaufen und starr mit dem inneren Rahmen (28) und dem äußeren Rahmen (30) verbunden sind, und wobei der äußere Rahmen (30) zumindest an zu Ecken (35) des inneren Türrahmens (28) direkt benachbarten Bereichen schräg zu den Querstreben (38, 40, 42, 44) verläuft.

## Beschreibung

### Technisches Gebiet

Die vorliegende Beschreibung betrifft eine Türrahmeneinheit zur Integration in einen Rumpf eines Luftfahrzeugs, eine Türanordnung in einem Luftfahrzeug sowie ein Luftfahrzeug mit einer derartigen Türanordnung und/oder einer derartigen Türrahmeneinheit.

### Technischer Hintergrund

Übliche Konstruktionsprinzipien eines Flugzeugrumpfs und einer Flugzeugtür für Verkehrsflugzeuge verhindern eine Übertragung von Kräften aus dem Flugzeugrumpf in die Struktur der Flugzeugtür. Die Flugzeugtür ist dafür ausgelegt, aus einem Differenzdruck zwischen einem Inneren des Flugzeugrumpfs und der Umgebung resultierende Druckkräfte aufzunehmen und diese über einen Türrahmen oder dergleichen in den Flugzeugrumpf zu leiten. Eine Umgebung eines Türausschnitts in dem Flugzeugrumpf ist daher mechanisch darauf angepasst und ausgelegt, sowohl Rumpfkräfte, als auch die aus der Flugzeugtür stammenden Kräfte aufzunehmen. Insbesondere in einer Rumpfhaut verlaufende Kräfte können dort hoch sein, um den Türausschnitt zu stabilisieren. Üblicherweise wird hierfür ein Türrahmen vorgesehen, der eine Vielzahl von einzelnen Teilen umfasst, beispielsweise Spant, Lintel, Interkostal, Sill, Doppler und dergleichen. Dies geht mit einem vergleichsweise hohen Gewicht und einer aufwändigen, langwierigen Fertigung einher.

Beispielsweise wird in DE 10 2018 127 106 B3 ein Flugzeugtürverriegelungssystem offenbart, das dazu dient, eine relativ zu einem Türrahmen bewegbare Flugzeugtür zu verriegeln. Der Rahmen ist dort als ein Kastenprofil mit mehreren gleichlangen Querstreben gezeigt, die mit einer Rumpfhaut verbunden sind.

### Beschreibung

Es kann als Aufgabe betrachtet werden, einen alternativen Türrahmen oder eine alternative Türanordnung vorzuschlagen, die mit einer vereinfachten Fertigung und/oder einem geringeren Gewicht verbunden ist.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird eine Türrahmeneinheit zur Integration in einen Rumpf eines Luftfahrzeugs vorgeschlagen, aufweisend mindestens eine Türrahmenkomponente, wobei die Türrahmeneinheit einen inneren Rahmen und einen den inneren Rahmen umgebenden äußeren Rahmen aufweist, wobei der innere Rahmen eine Türrahmenöffnung mit horizontalen Kanten und vertikalen Kanten definiert, in der eine Tür anbringbar ist, wobei eine Vielzahl von Querstreben zwischen dem inneren Rahmen und dem äußeren Rahmen verlaufen und starr mit dem inneren Rahmen und dem äußeren Rahmen verbunden sind, und wobei der äußere Rahmen zumindest an zu Ecken des inneren Türrahmens direkt benachbarten Bereichen schräg zu den Querstreben verläuft.

Die Türrahmeneinheit ist zur Anordnung an einer Rumpfhaut eines Luftfahrzeugs im Bereich einer Türöffnung vorgesehen. Sie stellt eine Rahmenstruktur bereit, die herkömmliche, nur einen Innendruck tragende Türen lagert und getrennte Lastpfade zum Übertragen von Kräften von der Tür an die Rumpfstruktur herstellen kann. Die Türrahmeneinheit besteht dabei aus mindestens einer Türrahmenkomponente, die die weiter nachfolgend erläuterte Form bilden.

Die Türrahmeneinheit ist erfindungsgemäß derart gestaltet, dass ein innerer Türrahmen und ein äußerer Türrahmen bereitgestellt werden, wobei der äußere Rahmen den inneren Türrahmen umgibt, d.h. umläuft und insbesondere vollständig umläuft. Der innere Türrahmen ist dabei vorgesehen, um die Tür zu haltern und in einem geschlossenen Zustand die auf die Tür wirkenden Kräfte aufzunehmen. Hierfür kann der innere Türrahmen Türzapfen aufweisen, die formschlüssig mit der Tür verbindbar sind.

Der innere Türrahmen weist eine Türrahmenöffnung auf, die im Wesentlichen rechteckig ist und zwei horizontale Kanten und zwei vertikale Kanten umfasst. Die Ecken könnten abgerundet sein. Die Türrahmenöffnung ist derart dimensioniert, dass eine Tür darin bewegbar gelagert werden kann.

Der äußere Türrahmen erstreckt sich über eine größere Fläche als der innere Türrahmen und ist nicht direkt mit der Türrahmenöffnung assoziiert. Er umgibt den inneren Türrahmen und ist mit diesem über die Vielzahl von Querstreben starr verbunden. Die Querstreben leiten Kräfte, die von einer in dem inneren Rahmen angeordneten Tür stammen, direkt in den äußeren Rahmen und von dort in die Struktur des Rumpfs. Die Querstreben könnten sich exemplarisch parallel zu einer Längsachse des Flugzeugs erstrecken, in dem die Türrahmeneinheit angeordnet ist. Dies heißt insbesondere, dass die Querstreben beispielsweise parallel zu einer Oberkante oder einer Unterkante des inneren Türrahmens verlaufen könnten. Eine abweichende Anordnung ist jedoch ebenfalls nicht ausgeschlossen.

Es ist bevorzugt, dass der innere Rahmen und der äußere Rahmen ein Querschnittsprofil aufweisen, welches ein ausreichendes Flächenträgheitsmoment bereitstellt, um Lasten aufzunehmen und in die Struktur zu leiten. Zumindest der äußere Rahmen könnte sich bevorzugt über eine geschlossene, kontinuierliche, tangentenstetige bzw. knickfreie Linie erstrecken.

Durch das Umlaufen des inneren Rahmens durch einen äußeren Rahmen sowie die starre Verbindung der beiden Rahmen miteinander kann eine großflächige Kraftverteilung in die Rumpfstruktur erfolgen. Ein lokal zu den Querstreben schräger Verlauf des äußeren Rahmens erhöht dort die Festigkeit deutlich und kann zu einer Reduktion notwendiger Aufdopplungen an der Rumpfhaut führen.

Der lokal schräge Verlauf kann durch eine besonders günstige Form des äußeren Rahmens, beispielsweise eine runde Form, erreicht werden. Der für die Integration der Türrahmeneinheit erforderliche Türausschnitt kann zumindest in vertikaler Richtung vergrößert werden, um abgerundete Ecken des Türausschnitts mit im Vergleich zum Stand der Technik deutlich vergrößerten Eckradien zu realisieren. Der Kraftverlauf an dem Türausschnitt ist dadurch besonders gleichmäßig und es entstehen keine besonders ausgeprägten Lastspitzen.

Die Türrahmeneinheit kann aus wenigen, separat herzustellenden Türrahmenkomponenten bestehen. Eine Vielzahl von Komponenten, die vormals einzeln hergestellt, gefügt und dann in eine mehrfach aufgedoppelte Rumpfhaut eingebaut werden müssen, entfallen. Die erfindungsgemäße Türrahmeneinheit erfordert neben der Rumpfhaut lediglich optional eine auf der Rumpfhaut angebrachte Dopplung, an der die Türrahmeneinheit angeordnet wird. Die erfindungsgemäße Türrahmeneinheit ist derart gestaltet, dass eine ausfallsichere Herstellung von unabhängigen Lastpfaden zwischen einzelnen Türzapfen und der Rumpfhaut bzw. der Rumpfstruktur möglich ist. Weiterhin sind auch krafttragende Türen einsetzbar. Somit besteht die Möglichkeit, die erfindungsgemäße Türrahmeneinheit in bereits existierenden Flugzeugen oder Flugzeugtypen einzusetzen, ohne die Art von Türen ändern zu müssen.

Die Besonderheit der erfindungsgemäßen Türrahmeneinheit ist ihre konstruktive Form und Lage ihrer wesentlichen strukturellen Merkmale zueinander, die so gestaltet sind, dass der Kraftfluss um einen Türausschnitt im Flugzeugrumpf gezielt herumgeführt werden kann. Auch unter Berücksichtigung der nachfolgenden Erläuterungen wird deutlich, dass auch die Teilevielfalt und damit Fertigungskosten reduziert werden können. Insbesondere bei einem besonders hohen Grad eines integralen Aufbaus der mindestens einen Türrahmenkomponente kann Gewicht eingespart werden. Die Tür könnte, wie vorangehend bereits angedeutet, auch als krafttragendes Element integriert werden, wobei die ausfallsichere Anforderung in dem durch die Türrahmeneinheit realisierten Türrahmen erhalten bleibt. Die Lage der Tür im Rumpf wird vielseitiger und kann überall ohne wesentliche Änderung der Stärke der Rumpfhaut eingebaut werden, was mit üblichen Lösungen derzeit nicht möglich ist.

In einer vorteilhaften Ausführungsform ist der äußere Rahmen rund, insbesondere kreisrund, elliptisch oder oval ausgebildet. Runde Formen können ein harmonisches, weitgehend lastspitzenfreies Leiten von Kräften um einen Türausschnitt in dem Flugzeugrumpf herum unterstützen. Ovale Formen könnten sich anbieten, wenn der Türausschnitt eine Höhe aufweist, die die Breite des Türausschnitts übersteigt. Ein ovaler äußerer Rahmen könnte insbesondere elliptisch sein und derart angeordnet werden, dass seine Hauptachse vertikal und seine Nebenachse horizontal verläuft.

In einer vorteilhaften Ausführungsform weist der äußere Rahmen in einem vertikal mittigen Bereich der Türrahmeneinheit eine größere Breite auf als in vertikal von dem mittigen Bereich weiter zu einer Oberseite bzw. einer Unterseite gewandten benachbarten Bereichen. Dies kann insbesondere bei Ausführung des äußeren Rahmens mit einer runden bzw. ovalen Form erreicht werden. Die an dem inneren Rahmen entstehenden und in den äußeren Rahmen eingeleiteten Lasten können in eine größere Fläche verteilt werden. An einer Oberseite und/oder einer Unterseite könnten Querstreben vorgesehen sein, die sich über den äußeren Rahmen hinaus erstrecken und zur Verbindung mit einem Doppler vorgesehen sein könnten.

In einer vorteilhaften Ausführungsform erstrecken sich die Querstreben zumindest teilweise von dem inneren Rahmen zu dem äußeren Rahmen und enden dort. Dies bedeutet, dass zumindest ein Teil des inneren Rahmens mit radial außen daran anschließenden Querstreben verbunden ist, die sich von dem inneren Rahmen radial nach außen erstrecken und dort bis zu dem äußeren Rahmen verlaufen. Damit wird eine Übertragung von relativ zu dem Türausschnitt radial verlaufenden und sich in der Rumpfhautebene erstreckenden Lasten von dem inneren Rahmen zu äußeren Rahmen unterstützt. Insbesondere bei einem lokal höheren Abstand zwischen dem äußeren Rahmen und dem inneren Rahmen kann es ausreichen, die dort vorgesehenen Querstreben an dem äußeren Rahmen enden zu lassen. Ist der lokale Abstand relativ gering, könnte es sinnvoll sein, die Querstreben über den äußeren Rahmen verlaufen zu lassen, um ein großflächigeres Übertragen von Kräften in die Rumpfhaut zu erreichen.

In einer vorteilhaften Ausführungsform weist mindestens eine Querstrebe an einer Oberseite der Türrahmeneinheit und/oder an einer Unterseite der Türrahmeneinheit eine größere Länge auf als eine benachbarte Querstrebe, die vertikal weiter von der Oberseite bzw. Unterseite beabstandet ist, und erstreckt sich in Querrichtung über den äußeren Rahmen hinaus.

In einer vorteilhaften Ausführungsform sind die Querstreben parallel zueinander ausgebildet. Sie sind dabei insbesondere parallel zu einer Unterkante und einer Oberkante eines Türausschnitts ausgerichtet und verlaufen folglich bevorzugt parallel zu einer Längsachse des Rumpfs. Es ist denkbar, dass die Querstreben in einer vertikalen Richtung, d.h. entlang von Seitenkanten des Türausschnitts, voneinander beabstandet sind. Die Querstreben könnten damit folglich quer zu Spanten und parallel zu Stringern verlaufen, die an einer Innenseite der Rumpfhaut angeordnet sind. Durch die parallele Ausrichtung kann die Fertigung vereinfacht und gleichzeitig eine primäre Lastverlaufsrichtung festgelegt werden.

In einer vorteilhaften Ausführungsform ist die Türrahmeneinheit mehrteilig ausgeführt und weist mehrere miteinander verbundene Türrahmenkomponenten auf. Die Türrahmeneinheit könnte beispielsweise zwei vertikal verlaufende und horizontal nebeneinander angeordnete seitliche Türrahmenkomponenten aufweisen. Es ist zudem denkbar, dass alternativ und/oder zusätzlich eine obere und eine untere Türrahmenkomponente vorgesehen ist.

In einer vorteilhaften Ausführungsform weist die Türrahmeneinheit ein Oberteil, ein Unterteil und zwei Seitenteile auf. Sowohl das Oberteil und das Unterteil als auch die beiden Seitenteile könnten symmetrisch zueinander ausgerichtet und ausgebildet sein. Durch die Verwendung von vier Türrahmenkomponenten könnte eine integrale Fertigung durch Druckguss, 3D-Druck oder Auftragsschweißen erfolgen, wobei die vier Türrahmenkomponenten einfach transportabel und dennoch rasch montierbar sein.

In einer vorteilhaften Ausführungsform sind mehrere Türzapfen zum Tragen der Tür an dem inneren Rahmen angeordnet und ragen in die Türrahmenöffnung. Zumindest ein Teil der Türzapfen ist bevorzugt redundant ausgeführt, beispielsweise durch paarweise Anordnung von Türzapfen an den betreffenden Stellen. Dann führt jeder Türzapfen zu einem individuellen Lastpfad, der von dem Lastpfad unabhängig ist, der mit dem anderen Türzapfen des betreffenden Paars verknüpft ist.

In einer vorteilhaften Ausführungsform weist die Türrahmeneinheit ferner einen Radienverschlussbereich an der Oberseite und der Unterseite der Türrahmeneinheit auf, wobei der Radienverschlussbereich dazu ausgebildet ist, einen oberen bzw. unteren Teil des Türausschnitts bis zu der betreffenden horizontalen Kante zu verdecken. Der Radienverschlussbereich dient demnach dazu, die aufgrund des vergrößerten Eckradius in vertikaler Richtung vergrößerten Türausschnitt auf eine herkömmliche Größe zurückzuführen, um die daraus resultierende Öffnung auf die Größe einer Flugzeugtür anzupassen. Der Radienverschlussbereich könnte in Form einer Kombination unterer bzw. oberer Querstreben und einer Haut erfolgen, die sich bündig an eine betreffende örtliche Begrenzungskante des Türausschnitts anschmiegt. Gegebenenfalls ist dort ein Dichtprofil oder eine Dichtmasse vorgesehen.

Die Erfindung betrifft ferner eine Türanordnung in einem Luftfahrzeug, aufweisend eine Türrahmeneinheit nach der vorhergehenden Beschreibung und mindestens einen Doppler zum Anbringen an eine Rumpfhaut des Luftfahrzeugs im Bereich eines Türausschnitts. Der Türausschnitt ist insbesondere seitlich an dem Rumpf des Luftfahrzeugs angeordnet und könnte abgerundete Ecken aufweisen. Der mindestens eine Doppler ist als eine blechartige Komponente zu verstehen, die flächig mit einer Innenseite der Rumpfhaut verbunden ist, um lokal eine Aufdopplung der Rumpfhaut zum Vergrößern der Stärke der Rumpfhaut zu erreichen.

In einer vorteilhaften Ausführungsform ist die Türrahmeneinheit dazu ausgebildet, bei dem Betrieb des Luftfahrzeugs entstehende Lasten unabhängig von der Rumpfhaut des Luftfahrzeugs zu tragen und um den Türausschnitt in der Rumpfhaut zu leiten. Die Rumpfhaut in dem Bereich des Türausschnitts wird folglich durch Integration der erfindungsgemäßen Türrahmeneinheit im Vergleich zu herkömmlichen Türrahmenanordnungen deutlich entlastet.

In einer vorteilhaften Ausführungsform sind zwei Doppler vorgesehen, die an einer Oberseite und einer Unterseite des Türausschnitts auf der Rumpfhaut angeordnet sind. Insbesondere bei der Verwendung eines runden, insbesondere kreisrunden, ovalen oder elliptischen äußeren Rahmens könnte die lokale Festigkeit der Türrahmeneinheit einen Verzicht auf einen dort angebrachten Doppler ermöglichen, sodass lediglich an der Oberseite und der Unterseite Doppler vorgesehen sein könnten.

In einer vorteilhaften Ausführungsform ist die Türrahmeneinheit auf die Rumpfhaut aufgeklebt, verschweißt oder vernietet. Bei metallischen Materialien bietet sich das Vernieten oder Verschweißen an, da dies bewährte Befestigungsverfahren sind. Weisen die Rumpfhaut und die Türrahmeneinheit ein thermoplastisches Material auf, wie etwa PEEK oder PEKK, könnte insbesondere ein Verschweißen in Erwägung gezogen werden, wobei Vernieten und Kleben grundsätzlich auch denkbar sind. Es sind auch weitere Varianten der Befestigung denkbar, die von dem Material der Rumpfhaut abhängen könnten. Es ist etwa denkbar, bei Rümpfen aus Faserverbundmaterialien, die auf einer Duromer-Matrix basieren, eine Co-Konsolidierung in Erwägung zu ziehen, bei der eine beispielsweise bereits vorgehärtete Türrahmeneinheit auf eine vorgehärtete Rumpfhaut gesetzt und dann zusammen mit der Rumpfhaut ausgehärtet wird.

In einer vorteilhaften Ausführungsform ist der Türausschnitt zumindest in der vertikalen Richtung größer als die Türrahmenöffnung. Die Türrahmeneinheit kann einen vertikal oberen und/oder unteren Teil des Türausschnitts überdecken und die Last in diesem Bereich um den Türausschnitt herum leiten bzw. in einen dort angeordneten Doppler übertragen.

Die Erfindung betrifft ferner ein Luftfahrzeug, aufweisend mindestens eine Türrahmeneinheit nach der vorhergehenden Beschreibung und/oder mindestens eine Türanordnung nach der vorhergehenden Beschreibung.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Flugzeugs mit einer Türanordnung gemäß einem Ausführungsbeispiel.
- Fig. 2: eine schematische Darstellung eines Türausschnitts.
- Fig. 3: eine schematische Darstellung einer Türrahmeneinheit.
- Fig. 4: eine schematische Darstellung einer Türanordnung.
- Fig. 5: eine schematische Darstellung der Türanordnung mit darin befindlicher Tür.

### Detaillierte Beschreibung von Ausführungsbeispielen

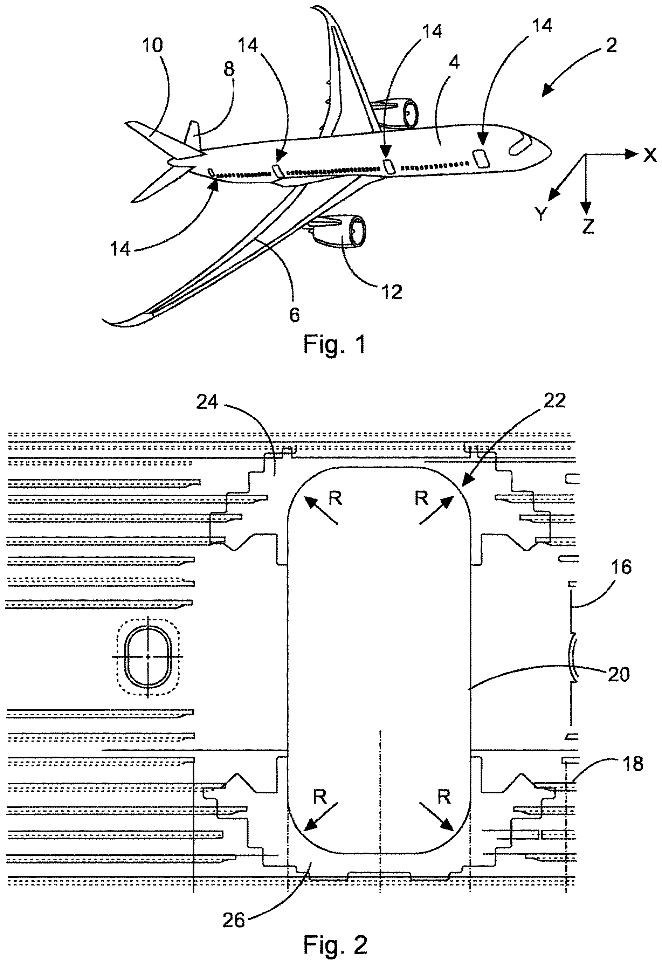

Fig. 1 zeigt ein Luftfahrzeug 2 mit einem Rumpf 4, Flügeln 6, einem Höhenleitwerk 8, einem Seitenleitwerk 10, Triebwerken 12 und mehreren erfindungsgemäßen Türanordnungen 14, durch die Passagiere und Besatzungsmitglieder in den Rumpf 4 des Luftfahrzeugs 2 gelangen können. Der Aufbau einer solchen Türanordnung 14 wird in den weiter nachfolgenden Figuren illustriert. Zur Verdeutlichung der Ausrichtungen einzelner Abschnitte der Türanordnung 14 ist in Fig. 1 ein flugzeugfestes Koordinatensystem dargestellt, auf das in der Beschreibung stellenweise bezogen wird.

Fig. 2 zeigt einen Ausschnitt einer Rumpfhaut 16 von einer Innenseite des Rumpfes 4 aus gesehen. Hier sind mehrere Längsversteifungselemente 18 (Stringer) vorgesehen, die parallel zueinander und parallel zu der Längsachse x des Luftfahrzeugs 2 verlaufen. In der Rumpfhaut 16 ist ferner ein Türausschnitt 20 vorgesehen, der in einer Orthogonalprojektion eine rechteckige Fläche mit abgerundeten Ecken 22 umfasst. Der Türausschnitt 20 ist in der vertikalen Richtung, d.h. entlang der z-Achse, größer als für die Integration einer Tür erforderlich wäre. Die abgerundeten Ecken 22 können kreisbogenförmig abgerundet sein und weisen jeweils einen Eckradius R auf, dessen Größe übliche Eckradien von Türausschnitten in Luftfahrzeugen deutlich übersteigt. Ein üblicher Eckradius könnte etwa 120 mm betragen. Der Eckradius R des Türausschnitts 20 könnte auf etwa 330 mm vergrößert sein. Es sind bei der Anfertigung des Türausschnitts 20 Eckradien R denkbar, die in einem Bereich von 150 mm bis 500 mm liegen, bevorzugt von 250 mm bis 400 mm und besonders bevorzugt von 300 mm bis 350 mm.

In einem oberen Bereich des Türausschnitts 20 ist ein oberer Doppler 24 vorgesehen, der sich von dem Türausschnitt 20 aus radial nach außen auf die Innenseite der Rumpfhaut 16 erstreckt. Der Doppler 24 könnte beispielsweise aus Titan gefertigt sein und vergrößert lokal die Stärke der Rumpfhaut 16 und verstärkt diese dadurch. An der Unterseite des Türausschnitts 20 ist ein unterer Doppler 26 angeordnet, der im Wesentlichen symmetrisch zu dem oberen Doppler 24 ausgeführt sein könnte und lokal die Rumpfhaut 16 verstärkt. Es kann sich anbieten, die Doppler 24 und 26 mit der Rumpfhaut 16 zu verkleben, insbesondere bei Verwendung eines anderen Materials für die Doppler 24 und 26 als für die Rumpfhaut 16.

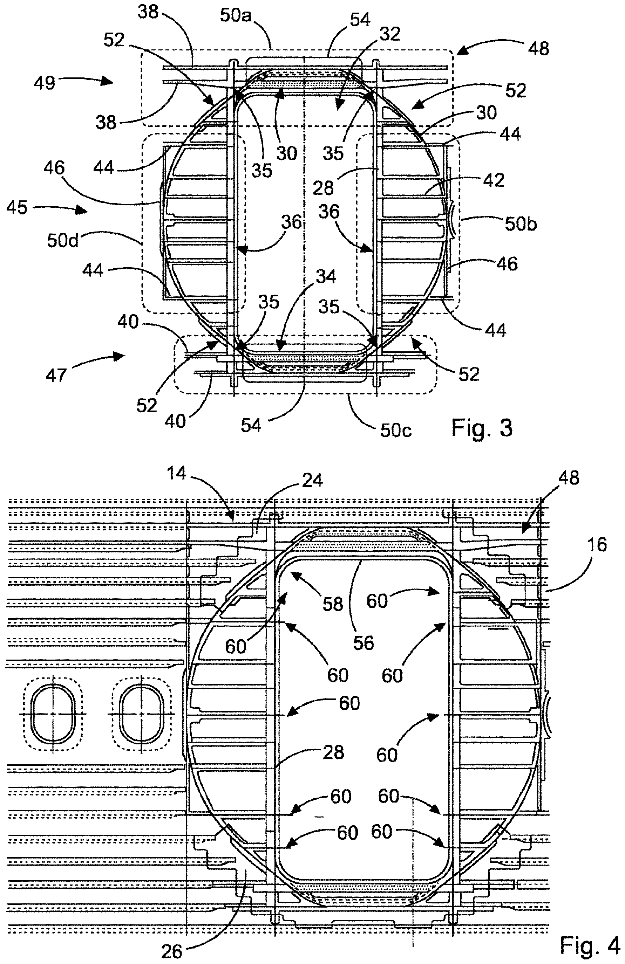

Fig. 3 zeigt nun einen inneren Rahmen 28 und einen äußeren Rahmen 30, wobei der innere Rahmen 28 eine Türrahmenöffnung 32 definiert und der äußere Rahmen 30 den inneren Rahmen 28 umläuft. Der äußere Rahmen 30 ist rund und annähernd kreisrund. In einem vertikal mittigen Bereich 45 weist der äußere Rahmen 30 daher eine deutlich größere Breite auf als in einem unteren Bereich 47 und einem oberen Bereich 49. Die Türrahmenöffnung 32 weist horizontale Kanten 34, vertikale Kanten 36 und dazwischenliegende Ecken 35 auf, wobei der innere Rahmen in einer Orthogonalprojektion im Wesentlichen eine rechteckige Fläche definiert. Die Türrahmenöffnung 32 ist dabei in der vertikalen Richtung kleiner als der Türausschnitt 20.

Es sind beispielhaft an dem oberen Bereich 49 zwei obere Querstreben 38 und in dem unteren Bereich 47 zwei untere Querstreben 40 vorgesehen, die zwischen den vertikalen Kanten 36 verlaufen und sich radial nach außen über den inneren Türrahmen 28 erstrecken. Sie überdecken damit den oberen bzw. unteren Teil des Türausschnitts 20 und die dort vorliegenden Eckradien R. Es sind im vertikal mittigen Bereich 45 weiterhin erste zentrale Querstreben 42 vorgesehen, die sich von dem inneren Türrahmen 28 zu dem äußeren Türrahmen 30 hin erstrecken und zum Großteil dort enden. Auf jeder Seite des Türausschnitts 20 sind außerdem zwei verlängerte, zweite zentrale Querstreben 44 vorgesehen, die sich in radialer Richtung etwas über den äußeren Rahmen 30 nach außen erstrecken und durch ein zusätzliches, vertikales Rahmenteil 46 miteinander verbunden sind. Hierdurch wird eine Türrahmeneinheit 48 gebildet, die zur Aufnahme einer Flugzeugtür dient.

Beispielhaft können hierfür vier Türrahmenkomponenten 50a, 50b, 50c und 50d verwendet werden, die separat voneinander hergestellt und anschließend zusammengesetzt werden. Die obere Rahmenkomponente 50a und die untere Rahmenkomponente 50c bilden an den Ecken 35 jeweils einen Radienverschlussbereich 54. Dort wird der vertikal vergrößerte Türausschnitt 20 mit dem vergrößerten Eckradius mit dem herkömmlichen Eckradius, beispielsweise 120 mm, auf ein herkömmliches Maß zur Integration einer Tür 62 zurückgeführt. Die Vorteile der Lastverteilung um den Türausschnitt 20 herum bleiben dabei bestehen und ein Aufnahmeraum für die betreffende Tür wird radial an die Größe der Tür angepasst.

Aufgrund der runden Form des äußeren Rahmens 30 sind auch untere und obere schräge bzw. diagonale Bereiche 52 vorgesehen, welche bei herkömmlichen Türrahmen nicht zu finden sind.

Fig. 4 zeigt die Rumpfhaut 16 mit der daran angeordneten Türrahmeneinheit 48, die damit die Türanordnung 14 ausbildet. Zum Vergleich der Türrahmeneinheit 48 mit einem üblichen Türrahmen 56 ist dieser mittels gestrichelter Linien angedeutet. Es wird deutlich, dass die üblichen Rahmenecken 58 einen deutlich kleineren Eckradius aufweisen als der Türausschnitt 20, wie vorangehend bereits ausgeführt.

In dem inneren Rahmen 28 sind Türzapfen 60 angeordnet, die in einem oberen Bereich und einem unteren Bereich des inneren Rahmens 28 jeweils paarweise und damit redundant ausgeführt sind. In einem vertikal mittigen Bereich ist hingegen auf jeder Seite ein einzelner Türzapfen 60 vorgesehen. Die Türzapfen 60 werden beim Schließen einer Flugzeugtür, die an dem inneren Rahmen 28 aufgehängt wird, formschlüssig mit der Flugzeugtür verbunden, um auf die Tür einwirkende Kräfte aufzunehmen und über die Türrahmeneinheit 48 in den Rumpf 4 zu leiten. Neben herkömmlichen Türen, die lediglich durch einen Innendruck aus dem Inneren des Rumpfes 4 belastet werden, können auch lasttragende Türen eingesetzt werden, welche zusätzlich Strukturlasten aufnehmen können.

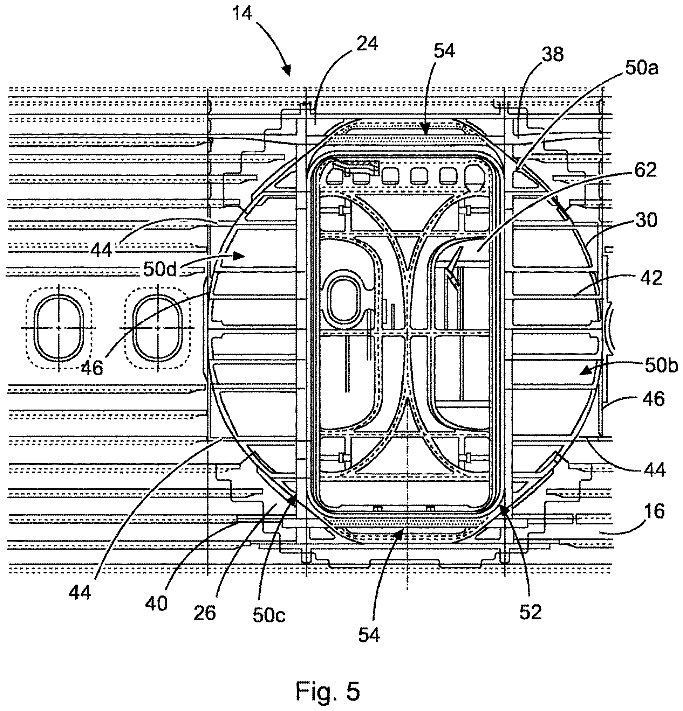

In Fig. 5 wird die Türanordnung 14 mit einer darin befindlichen Tür 62 dargestellt, welche mit den Türzapfen 60 in Verbindung steht.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Luftfahrzeug
- 4: Rumpf
- 6: Flügel
- 8: Höhenleitwerk
- 10: Seitenleitwerk
- 12: Triebwerk
- 14: Türanordnung
- 16: Rumpfhaut
- 18: Längsversteifungselement
- 20: Türausschnitt
- 22: Ecke
- 24: oberer Doppler
- 26: unterer Doppler
- 28: innerer Rahmen
- 30: äußerer Rahmen
- 32: Türrahmenöffnung
- 34: horizontale Kante
- 35: Ecke
- 36: vertikale Kante
- 38: obere Querstrebe
- 40: untere Querstrebe
- 42: erste zentrale Querstrebe
- 44: zweite zentrale Querstrebe
- 45: vertikal mittiger Bereich
- 46: vertikales Rahmenteil
- 47: unterer Bereich
- 48: Türrahmeneinheit
- 49: oberer Bereich
- 50: Türrahmenkomponente
- 52: unterer diagonaler Bereich
- 54: Radienverschlussbereich
- 56: üblicher Türrahmen
- 58: übliche Rahmenecke
- 60: Türzapfen
- 62: Tür

- R: Eckradius

## Patentansprüche

1. Türrahmeneinheit (48) zur Integration in einen Rumpf (4) eines Luftfahrzeugs (2), aufweisend mindestens eine Türrahmenkomponente (50),
wobei die Türrahmeneinheit (48) einen inneren Rahmen (28) und einen den inneren Rahmen (28) umgebenden äußeren Rahmen (30) aufweist,
wobei der innere Rahmen (28) eine Türrahmenöffnung (32) mit horizontalen Kanten (34) und vertikalen Kanten (36) definiert, in der eine Tür (62) anbringbar ist,
wobei eine Vielzahl von Querstreben (38, 40, 42, 44) zwischen dem inneren Rahmen (28) und dem äußeren Rahmen (30) verlaufen und starr mit dem inneren Rahmen (28) und dem äußeren Rahmen (30) verbunden sind, und
wobei der äußere Rahmen (30) zumindest an zu Ecken (35) des inneren Türrahmens (28) direkt benachbarten Bereichen schräg zu den Querstreben (38, 40, 42, 44) verläuft.

2. Türrahmeneinheit (48) nach Anspruch 1,
wobei der äußere Rahmen (30) rund, insbesondere kreisrund, elliptisch oder oval ausgebildet ist.

3. Türrahmeneinheit (48) nach Anspruch 1 oder 2,
wobei der äußere Rahmen (30) in einem vertikal mittigen Bereich (45) der Türrahmeneinheit (48) eine größere Breite aufweist als in vertikal von dem mittigen Bereich (45) weiter zu einer Oberseite bzw. einer Unterseite gewandten benachbarten Bereichen (47, 49).

4. Türrahmeneinheit (48) nach einem der vorhergehenden Ansprüche,
wobei sich die Querstreben (38, 40, 42, 44) zumindest teilweise von dem inneren Rahmen (28) zu dem äußeren Rahmen (30) erstrecken und dort enden.

5. Türrahmeneinheit (48) nach einem der vorhergehenden Ansprüche,
wobei mindestens eine Querstrebe (38, 40, 42, 44) an einer Oberseite (49) der Türrahmeneinheit (48) und/oder an einer Unterseite (47) der Türrahmeneinheit (48) eine größere Länge aufweist als eine benachbarte Querstrebe (38, 40, 42, 44), die vertikal weiter von der Oberseite (49) bzw. Unterseite (47) beabstandet ist, und sich in Querrichtung über den äußeren Rahmen (30) hinaus erstreckt.

6. Türrahmeneinheit (48) nach einem der vorhergehenden Ansprüche,
wobei die Querstreben (38, 40, 42, 44) parallel zueinander ausgebildet sind.

7. Türrahmeneinheit (48) nach einem der vorhergehenden Ansprüche,
wobei die Türrahmeneinheit (48) mehrteilig ausgeführt ist und mehrere miteinander verbundene Türrahmenkomponenten (50) aufweist.

8. Türrahmeneinheit (48) nach Anspruch 7,
wobei die Türrahmeneinheit (48) ein Oberteil (50a), ein Unterteil (50c) und zwei Seitenteile (50b, 50d) aufweist.

9. Türrahmeneinheit (48) nach einem der vorhergehenden Ansprüche,
wobei mehrere Türzapfen (60) zum Tragen der Tür (62) an dem inneren Rahmen (28) angeordnet sind und in die Türrahmenöffnung (32) ragen.

10. Türrahmeneinheit (48) nach einem der vorhergehenden Ansprüche,
ferner aufweisend einen Radienverschlussbereich (54) an der Oberseite (49) und der Unterseite (47) der Türrahmeneinheit (48),
wobei der Radienverschlussbereich (54) dazu ausgebildet ist, einen oberen bzw. unteren Teil des Türausschnitts (20) bis zu der betreffenden horizontalen Kante (34) zu verdecken.

11. Türanordnung (14) für ein Luftfahrzeug (2), aufweisend eine Türrahmeneinheit (48) nach einem der vorhergehenden Ansprüche und einen Doppler (24, 26) zum Anbringen an eine Rumpfhaut (16) des Luftfahrzeugs (2) im Bereich eines Türausschnitts (20).

12. Türanordnung (14) nach Anspruch 11, wobei die Türrahmeneinheit (48) dazu ausgebildet ist, bei dem Betrieb des Luftfahrzeugs (2) entstehende Lasten unabhängig von der Rumpfhaut (16) des Luftfahrzeugs (2) zu tragen und um den Türausschnitt (20) in der Rumpfhaut (16) zu leiten.

13. Türanordnung (14) nach Anspruch 11 oder 12, wobei zwei Doppler (24, 26) vorgesehen sind, die an einer Oberseite und einer Unterseite des Türausschnitts (20) auf der Rumpfhaut (16) angeordnet sind.

14. Türanordnung (14) nach einem der Ansprüche 11 bis 13, wobei der Türausschnitt (20) zumindest in der vertikalen Richtung größer ist als die Türrahmenöffnung (32).

15. Luftfahrzeug (2), aufweisend mindestens eine Türrahmeneinheit (48) nach einem der Ansprüche 1 bis 10 und/oder mindestens eine Türanordnung (14) nach einem der Ansprüche 11 bis 14.
